# EUROPEAN PATENT APPLICATION

(11) **EP 2 328 122 A1**
(43) Date of publication of application: **01.06.2011**
(21) Application number: 10192137.7
(22) Date of filing: 23.11.2010
(51) Int. Cl.: G06Q 20/00

(54) **System and method for granting access to a system**

(30) Priority: 27.11.2009 FI 20090449
(71) Applicant: Eazybreak Oy, 00100 Helsinki (FI)
(72) Inventor: Friman, Kai-Erik, 02660, Espoo (FI)
(74) Representative: Kalliola, Sanna Marketta

(57) **Abstract**

Embodiments of the invention are concerned with a method and system for granting access to a service based on received request and a communication between a subscriber, client and a service provider.

## Description

### Field of the Invention

The present invention relates generally to granting access to a system, and is particularly, but not exclusively, suited to a system enabling mobile payment of a service.

### Background of the Invention

There are multiple ways to pay for goods and services. Credit cards, debit cards etc are widely used way to pay instead of cash. In addition to general type of payment methods, there exists payment methods which are based on vouchers, gift cards etc issued as a return for prepayment by a merchant himself or by another entity. Many merchants accept also so called value notes (such as Lounasseteli™ in Finland), gift cards, present cards, vouchers.

One example of such prepaid system is lunch voucher (such as Lounasseteli™ in Finland) where an employer pays before hand for given number of lunch vouchers to issuer of vouchers. Said vouchers are then given either as bonus, fringe benefit or as part of salary to employees. Employees can use the vouchers to pay for lunch or dinner in restaurant by giving the voucher as payment to merchant. Merchants then send vouchers later to issuer of the vouchers and receive money.

A particular problem experienced with such system with vouchers is the amount of manual work needed in handling distribution of vouchers from voucher issuer to an employee via an employer and then back from an employer to the issuer via a merchant. Additional problem is the delay between use of a voucher and transfer of money to the merchant. In addition pre payment of vouchers from employer point of view lead to increased costs and tying up capital.

### Summary of the Invention

In accordance with aspects of the present invention, there is provided a method and system according to the appended claims.

At least some embodiments of the invention provide a method and system for granting access to a service.

This is achieved by a combination of features recited in each independent claim. Accordingly, dependent claims prescribe further detailed implementations of the embodiments of the present invention.

Features and advantages of the invention will become apparent from the following description of preferred embodiments of the invention, given by way of example only, which is made with reference to the accompanying drawings.

### Brief Description of the Drawings

Figure 1 is a schematic diagram showing an environment in which at least some of the embodiments of the invention can operate;
Figure 2 is a schematic block diagram showing components of a content delivery platform according to an embodiment of the invention;
Figure 3 is a schematic flow diagram showing an embodiment of the invention;
Figure 4 is a schematic flow diagram showing a message flow according to at least some embodiments of the invention;
Figure 5 shows a schematic database structures of some embodiments of the invention.
Figure 6 shows a schematic flow diagram of an embodiment of the invention;

### Detailed Description of the Invention

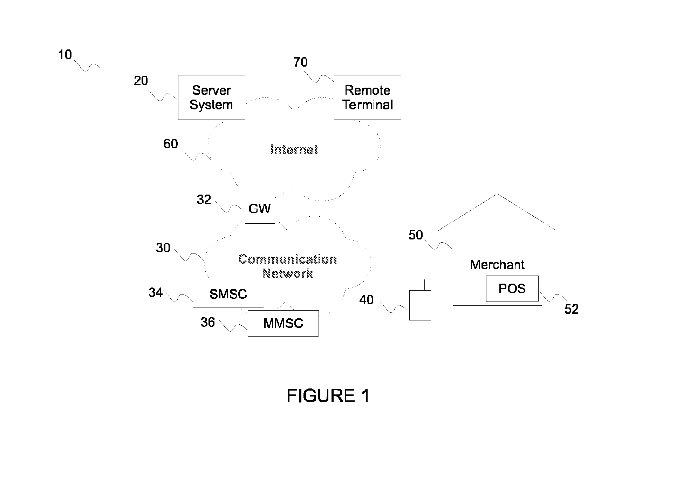

As described above, embodiments of the invention are concerned with improving efficiency of performing transactions between consumers and merchants. Embodiments below are related, but not limited, on providing solution on enabling payment of lunch in cafeteria using Short Message Service (SMS) messages with mobile phone. One embodiment of the invention would be applicable to subscribers of ecosystem 10 shown in Figure 1. An exemplifying arrangement of the associate components will now be described, by way of an introduction to embodiments of the invention.

The Communication network 30 can be any cellular, broadcast, or wide area network. Examples of cellular network technologies include but are not limited to GSM (Global System for Mobile communication), WCDMA (Wideband CDMA), CDMA (Code Division Multiple Access), GPRS (General Packet Radio Service), UTRAN (UMTS Radio Access Network), UMTS (Universal Mobile Telecommunications System), MBMS (Multicast Broadcast Multimedia System), 3 Generation etc. Examples of other network technologies include but are not limited to local area networks, such as Wireless Local area networks (WLAN), BlueTooth (BT), and other technologies, such as WiMax (Worldwide Interoperability for Microwave Access). The communication network 30 may also be connected to a public switched telephone network (not shown) and can provide generic Internet access using any transport methods. The communications network can consists of several technologies forming so called hybrid networks.

The exemplary GSM or 3G Communications network 20 might consists messaging elements Short Message Service Centre (SMSC) 34 or Multimedia Message Service Centre (MMS) 36 for providing Short Message Service (SMS) and Multimedia Message Service (MMS) messaging services for communication network subscribers. Further more the user may access via Communication network 30 data and multimedia resources such as Wireless Application Protocol (WAP) or Web services like web pages, videos etc over private or public data networks such as the Internet 60.

The communication network 30 can be connected to Internet 60 via Gateway (GW) system 32 comprising one or more connectivity means depending on need. Gateway 32 can be for example for providing access to Wireless Application Protocol services in which case Gateway 32 could consist WAP gateway. For generic Internet access to mobile subscribers GW 32 could consists Gateway GPRS Service Node. There might be services operated, managed, monitored or run by Server Systems 20 connected to Internet. Those services might use some Communication Network 30 services. Preferably connection from Server System 20 to Communication Network 30 services is done using secured connection via GW 32. In this scenario GW 32 might consists of firewalls etc to provide controlled access to Communication Network 30 resources.

The mobile terminal 40 may be a mobile phone, a personal digital assistant (PDA), a multimedia computer, a personal computer, a lap top, etc., or generally any terminal capable of accessing services, such as content download, web browsing, streaming, Wireless Application Protocol (WAP) browsing, Internet browsing voice and messaging (SMS, MMS ect). In the case of the mobile network 30 being embodied as a GSM, GPRS or WCDMA network, the terminal is a mobile phone with associated GSM, GPRS or WCDMA functionalities. Mobile terminal might have also other communication interfaces such as BlueTooth, Wireless Local Area Network (WLAN), Radio Frequency Identification (RFID), infrared (IR) etc. While Figure 1 shows one terminal embodiments of the invention can be used to situations with more terminals.

There can be one or more remote terminals 70 connected to Internet 60. Remote terminals 70 are typically Personal Computers with Internet connection and web browser or dedicated application. Remote terminal can be also mobile terminal with Internet access. In embodiments of the invention remote terminals might be used for accessing some of services provided by Server System 20 over preferably secured Internet connection.

Some embodiments of the invention relate to payment using mobile terminal 40 in Merchants 50 premises to pay for goods or services. Merchant can have or have access to one or more remote terminal 70. Merchant might have also in the premises point of sales terminal (POS) 52. POS 52 is typically cash register or similar. POS might consist also from payment reader such as credit card reader or RFID reader for contactless payments.

In example embodiments Server System 20 is computer system used to receive and send messages to subscribers with mobile terminals 40 via Communication network 30. Server System 20 can be used to monitor usage of services, configure and manage services, and provide reporting services to remote terminals 70. Server system can provide interfaces to accounting systems (not shown) and to bank systems (not shown) for transferring funds between parties. Server System 20 might consist of one or more server units, databases, memories, power units etc. Additionally the modules of server system might be in one location or can be distributed without limiting generality of the invention. Server System might run computer program implemented with any programming language such as C++, Java, PHP, ASP etc and might run operating system such as Linux, Windows etc. Databases might be databases like mySQL, Oracle etc.

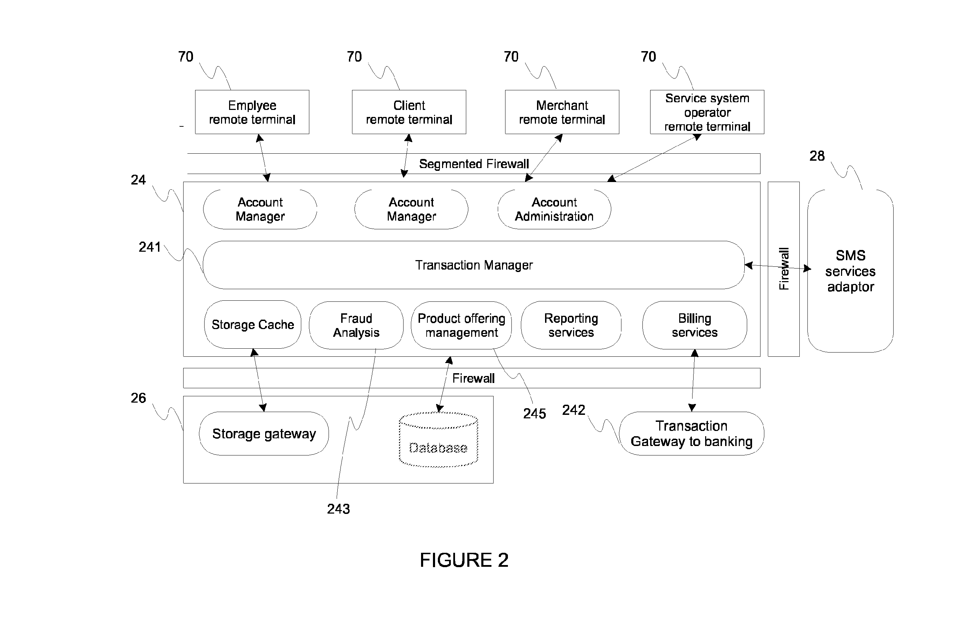

Figure 2 shows example physical layout of Service System 20 and some related external components. The core of the Service System are servers 24 that include Transaction Manager module 241. Transaction Manager module 241 handles data flows between different components. Transaction manager handles for example messaging services to and from customers using system. For SMS based implementation there is SMS services adaptor server 28 connected via firewall to transaction manager module/component of server(s) 24. SMS service adaptor 28 is further connected to communication network 30 services/elements such as SMSC 32. Users of the system include employees, clients, merchants and system operator of service. These parties can access Service System 20 with remote terminals 70 via firewall and have access depending on configuration to different account management and/or account administrator services running in servers 24. Storage cache is used to enable fast transaction between data bases in server cluster 26 and server cluster 24. Data relating to subscribers, clients, merchants can be stored in databases in servers 26. Since fraud analysis 243 can be time critical function it is preferably implemented as module running in core of Service System 20 ie. , in server cluster 24. Additional service modules can be for example Product Offering Management to be used to customise and manage services for Clients and Merchants, Reporting Services for generating reports for users of the system. Typically integration to banking is done via Billing Services module and transaction gateway to banking module 242.

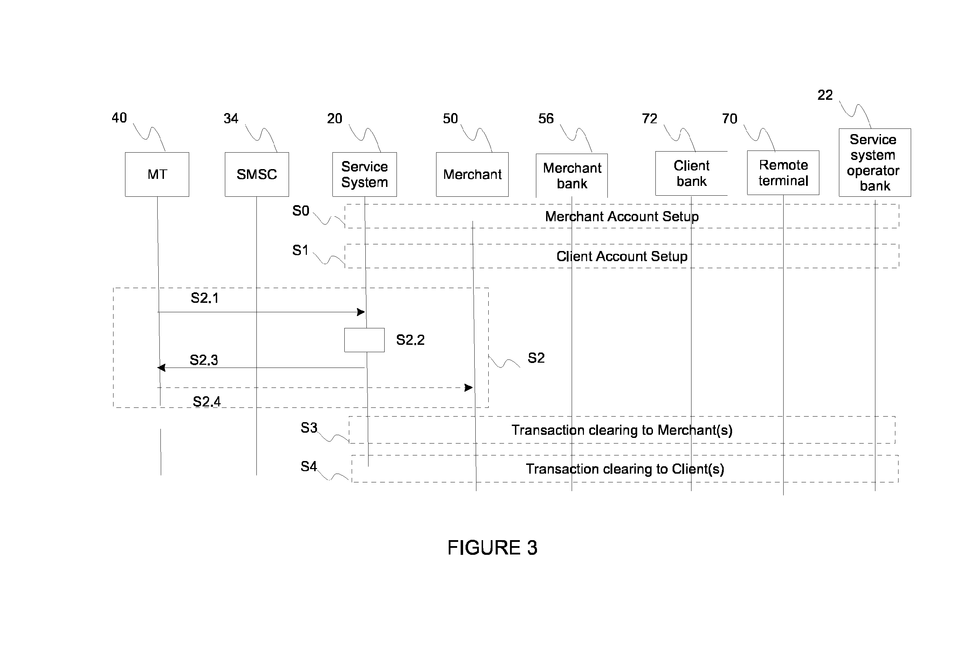

An example of some steps and functionalities are shown in figure 3. In high level there are some main steps S0, S1, S2, S3, S4. The steps might include sub steps like 52.1, S2.2, S2.3, S2.4. Steps might be executed in order of description or any other order. Some of the steps might be executed more than others. In some embodiments all steps are not needed.

Step S0 is called Merchant Account Setup step. As an example, a merchant can be a restaurant like McDonalds™ or Sodexho™. However merchant can be any business offering goods or services. In the step S0 Merchant 50 or representative of Merchant 50 makes agreement with Service System 20 operator (i.e. service provider providing payment service i.e. mobile lunch voucher in this example) or owner or representative. In practice, Merchant 50 agrees to accept payment method of Service System 20 operator as valid payment method in one or more premises of the Merchant. One of sub sets of S0 include setting up business rules on amount of payments accepted by payment method, maximum number of payments in certain period, transaction of funds between service system operator and merchant, configuring Service System 20 to hold profile, account information, merchant bank 56 account information etc. Step S0 might also include integration/configuration of Service System 20 to perform payments automatically or manually to Merchant bank 56 typically from service system operators bank 22 or alternatively from Client bank 72. In one embodiment, Merchant premises are allocated with unique code such as 0001, 1234, 43234, ABC24, AbCD or picture or 2-d bar code, RFID tag etc. Said unique code(s) is(are) stored in the database of Service System 20 of service provider. In one embodiment said unique code is printed in sticker and sticker is sent to merchant. Merchant might place the sticker for example by the front door of the merchant premises or by the point of sales 52 of merchant store 50. The sticker might have information like. "Send code 1234 to number 16400 to pay for lunch" or "Send code 1234 and price of lunch to number 16400 to pay for lunch" or "Send code 1234 and name of lunch to number 16400 to pay for the lunch" etc. In case of 2-d bar codes bar code would be read with bar code reader of mobile phone.

Step S1 is called Client Account Setup step. Client refers to customers of Service system operator. Example clients are companies offering their employees (subscribers for payment service) possibility to pay for lunch or dinner with their mobile phone. In the step S1 Client and service system operator make an agreement about the services. In the agreement they typically agree on payment terms and conditions, a (mobile phone) number range for using services, amount of daily/weekly/monthly purchases with the phone, monetary value(s) per transaction, maximum daily, weekly, monthly transaction monetary value per Client and per employee of Client (subscriber to service), time of the day services are available, range of Merchants (all, some, certain chain, certain area, inclusion, exclusion to/from service etc) the service is available etc. Agreed business rules are stored in database of Service System 20. There can be user interface for Client to monitor, create reports, and/or configure some of the settings via preferably secured connection using remote terminal 70. Clients might have possibility to add and delete subscribers/subscriber numbers (and related employee info like name, employee id etc) using the remote terminal 70.

In some embodiments of the invention, subscribers might have different usage profiles for the services. Subscriber might have right to use certain services in limited manner such as one lunch per day or use service only during work days. Usage profile might also include information about maximum daily / weekly amount of funds that can be spent. Additionally usage profiles can have limitations or definitions on which restaurants or other places said subscriber or group of subscribers can use services. As an example there could be usage profile defining that the services can be used for movie tickets or gym. Some of the usage profiles might have setting of following certain tax laws or principles. An example is that one meal per day could be included as tax free benefit but if subscribers uses more than one per day other meals would be accounted as non tax free benefit or as extra salary of subscriber.

In one arrangement Client transfers/allocates certain amount of funds from Client bank 72 to service operator bank 22. As the employees of the Client use the service said funds are offset by amount of money used + possible additional service fees / transaction fees. Offsetting funds is described more detailed in step S4 Transaction clearing to clients.

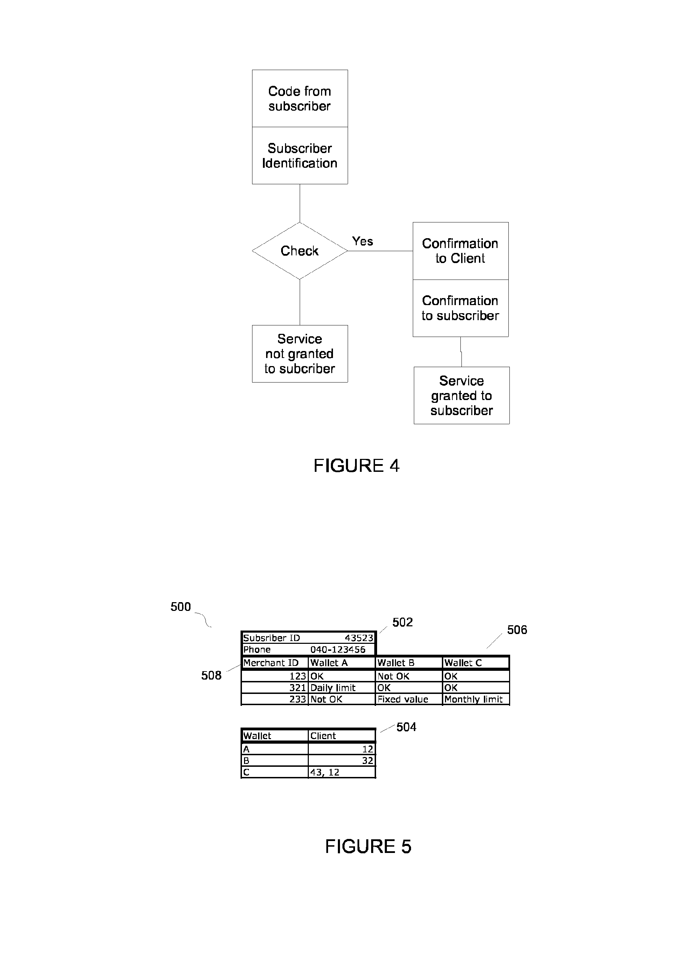

There are plurality of ways how a user may be registered to a system as a subscriber, i.e. as person who is authorized to use the service and make payments using the system. An embodiment according to at least one of the embodiments of the invention is presented in figure 4. A client, e.g. Company A, has a unique identification code. The identification code may be issued by the service provider or some existing identification code of the Company A may be used as the unique identification code of the embodiment. Such an existing identification code may be e.g. company's registering number or even name of the Company. The Company A wishing to give access to the service instructs an Employee Al to use the unique identification when registering to the system using an user interface provided by the service provider. During registration, a subscriber wishing to register to the service enters an unique identification code as instructed by his/her employer. Additionally, the subscriber enters to the system his/her mobile phone number. In some embodiments of the invention, the subscriber may add more than one mobile phone numbers. In some embodiments identification information of the subscriber is received from the subscriber. The identification information may comprise one or more of name, address, employee identification number, social security number, and birth date. Also other additional personal details may be also asked from the person registering to the system. After the subscriber has given requested information, a confirmation request including identification information about the subscriber is sent from the service provider to the client. The confirmation request may be delivered from the service provider to the client e.g. by email, SMS, mail or as a message within the client's or the service provider's database system. The client verifies that the client indeed wishes to give rights for the subscriber to register to the system and after that sends a response to the confirmation request. The response may be delivered using same or different method that what was used to deliver the request. After receiving the confirmation response from the client, a confirmation message is sent to the mobile phone number of the subscriber to check that the mobile phone number works. The confirmation message may be sent as a SMS or MMS message. Once a confirmation reply message, e.g. a SMS or MMS message, is received, access to the service is granted for the subscriber and the grant is registered to a database.

According to one embodiment of the invention identification information of a subscriber is received from the client. After receiving the identification information of the subscriber, the service system sends an activation link over Internet, e.g. as an e-mail message, to the subscriber. Once the subscriber opens the email and clicks the link and confirms his/her identification information, including his/her mobile phone number.

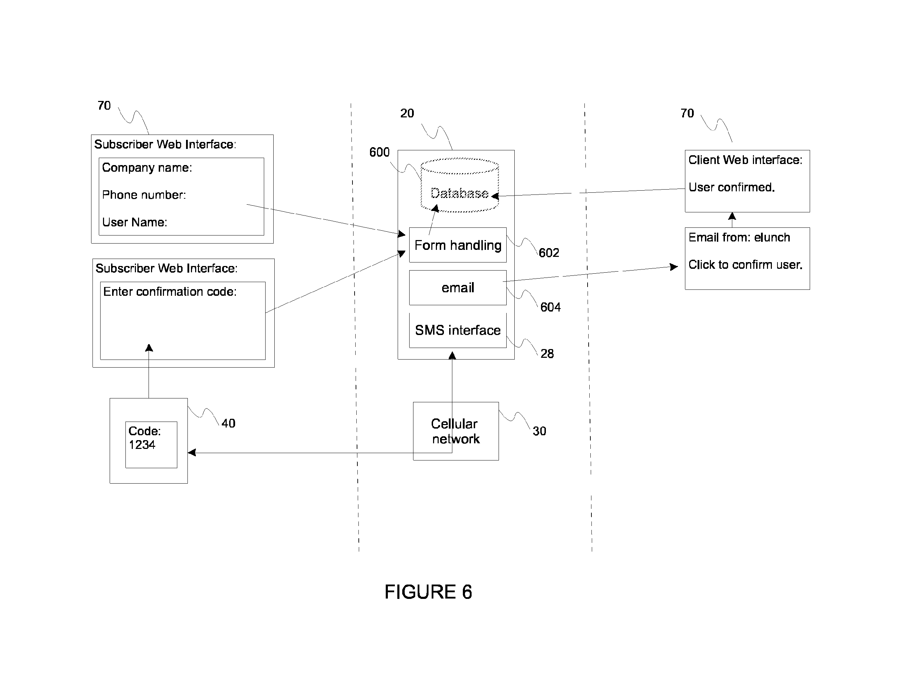

Embodiments of the present invention are typically implemented using a system that comprises elements as shown in Figure 6. Client / company / employer of employee provides instructions on how to register to the system. This can be done for example by sending an email with instructions and preferably a link to registration page. User i.e. subscriber uses PC 70 connect to server system 20 according to instructions. Typically this is implemented with web based form. The form might include fields such as company name (i.e. client name) where subscriber is working, name of subscriber (user name) and phone number of subscriber. Form is submitted to server system 20 form handling logic 602 and information in the fields is stored in database 600. Server system 20 processes information and using information associated with client name sends for example an e-mail to client. Typically e-mail is sent to human resources department of the company. Instead of e-mail there might be other message such as SMS or normal mail sent to client. Client might also access server system 20 via web interface and look for new submitted subscribers. Client might have database of holding names, passwords, phone numbers, and/or registration indentifications (ID's) of employees. These type of information could be used to make approval process automatic. If client approves subscriber it typically clicks in approve link in either email or in web page. As the approval is done the status of subscriber is changed to approved subscriber in database 600. Server system sends confirmation message via SMS interface 28 to subscriber mobile phone 40 via communication network 30. An example of message is to sent a code consisting of numbers and/or characters to phone and request subscriber to enter the same via web interface. After both steps i.e. client approving subscriber and subscriber phone number has been confirmed the database status of subscriber is changed to "granted to service" status. Subscriber can now use services.

Step S2 is called Usage step. In the step S2 subscribers (employees of Clients or in general consumers) of service with mobile terminal 40 use the terminal to pay for example lunch in a cafeteria. Example use case is a subscriber with mobile phone going to eat lunch at McDonalds™. It is assumed in this example that said restaurant is client of mobile payment service. There is unique code placed in the front door of the restaurant stating: "To pay for any meal please send code 2321 to 16400". Note: since example McDonalds has multiple restaurants in a chain owned either by the chain or franchisee each restaurant might have unique code. Subscriber sends the code "2321" to 16400 using mobile phone 40 via SMSC 34 and communication network 30 to Service System 20 in step 52.1. If subscriber wants to pay for more than one meal the message might include number of lunches to be paid like "2321-2" for two lunches. The Service System 20 receives the message and compares sending number with list of subscriber phone numbers in the database of Service system in step 52.2. Further in step S2.2 Service system checks allocated funds and business rules related to Client of which employee subscriber is. Further is step S2.2 Service System compares business rules of Merchant with code 2321 i.e. allocates for example 6.5€ for the price of lunch meal in said McDonalds™. If subscriber is OK the Service System 20 sends via communication network 30 SMS to subscriber in step S2.3. A message might be for example:
"FirstName Lastname, 6.5€, Code - 2321-8, 03.05.2009 14:43".

One possible message flow with in Service system 20 for typical received message is to route message from SMS Service Adaptor 28 via firewall to transaction manager 241. Transaction manager 241 sends message to fraud analysis component 243. If message is deemed to be valid according to rules in fraud analysis component 243 it is further sent to product offering management module 245. Message content and subscriber identification code (ID) is used to analyse set business rules related to received voucher. As an example merchant code is mapped to subscribers employee rules on looking what services are allowed. Code might include in addition to merchant code additional information about requested service. If for example merchant is sports club with restaurant there can be merchant code with code 1234a for using to voucher for sports services and code 1234b for restaurant services. Client i.e. employee of subscriber might set rules on which type of services are allowed for each subscriber. As the code and other message content is analysed response message for subscriber is sent via transaction manager 241 to SMS services adaptor 28 and further to subscriber as a message. Typically product offering management module 245 also updates related databases to record transaction and create report of the transaction. Since there can be large number of different combinations of subscriber rights, client settings, regulatory constrains, mandatory transaction records and merchant preferences and offerings and prices the product offering management module 245 can run configurable algorithm or several algorithms to analyse message content to determine which services are granted.

The code might have fixed part and variable part. Code fixed part could be for example allocated number of merchant. Additionally fixed part could be daily code that varies. Variable part could be for example running number form 1, 2, 3,... etc. Running number could be used by restaurant clerk to verify that there is no fraud since those would be allocated by Service System in order. As an example first customer of the day would have Code 2321-1, second 2321-2, third 2321-3 etc. In case of having next customer with code 2321-2 would indicate for restaurant possible fraud since number 2321-2 had already be used. Alternatively code could be pseudo random code issued by Service System. List of same codes would have been delivered to restaurant and clerk would strike over one of the codes each time those are used.

Message might show as sender a number like 16400 or any text like eLunch or McLunch etc. Subscriber shows the message in restaurant to clerk to pay for the meal. Clerk might verify from list to see that said daily code is valid and for example ask person to identify him selves. Clerk will complete the purchase with POS 52. Alternatively Message to subscriber might be Multimedia Message Service (MMS) message containing for example certain picture as code for the Merchant and/or for example photo of the subscriber to be used for identification.

An example of some elements in database related to usage of services shown in figure 5. There is information related to subscriber 502 in database. For example subscribers might have identification code and associated other information such as mobile phone number etc. In data base there can be elements like Merchant identification (ID) 508. Example ID's could be 123, 321, 233 further being associated with actual Merchants such as restaurants. Each subscriber might have one or more Wallets 506 associated with subscriber.

Using wallet structure in database enables to reduce risk of fraud or credit losses. In practice wallets could be arranged in first in first out structure with principle of filling certain amount of credits (by clients to subscriber wallets) to be used per time period per wallet. As the credits are used from the wallet those would be filled based on business rules. This way possible loss of mobile terminal would lead to using only limited amount of credits.

As an example subscriber might have wallets A, B and C for different usage and business rules. Wallets might be for example for certain days (weekdays and weekends) or type of Merchants (restaurant vs health spa vs movie theatre). There might be business rules associated with subscriber service allowing certain services via certain wallets. For example Wallet A could have daily limit to Merchant 321 services. Merchants might set rules like maximum one purchase per day per subscriber, maximum monetary value per subscriver or certain number of vouchers per client per time period.

Business rules can be individual, group based or same for all. As an example of group based certain clients would set same rules for all employees. One such rule could be to adjust maximum allowed lunch value depending on location of subscriber. With this arrangement clients could take in account price level variations on services on area to area. Clients could also set system to work in such a way that for example lunch voucher is only valid when subscriber is travelling outside of own home city or town. This is particularly useful in situations where for example based on taxation laws employees are allowed to have free tax-free meals only when travelling. In such location based implantations service system 20 receives for location information either from mobile terminal (Global Position System GPS location or cell identification etc) or from mobile communication network 30. Location rules related rules would be implemented preferably in product offering management module 245 of service system.

Other type of group based rules could be legislative type of rules. An example of such is certain taxation laws applicable on giving free lunch to employees. In this type of group based rules could be adjusted based on place of work or citizenship of subscribers.

Subscriber might be allowed to use or have been given permission to use services from one or more Clients as the case might be for example if subscriber is working in two different companies. Wallets could be associated further with certain Client / Clients. Typically subscriber can access status of the Wallets via web interface using remote terminal 70 or for example by requesting status with mobile phone message.

Step S3 is called transaction cleared to merchant step. The transaction that is basically recorded, as approved transaction in step S2.2 is further processed in order to transfer related funds to merchant bank 56 either from service system providers bank 22 or from clients bank 72 depending on agreements and system integration. Funds transfer might happen in real time or close real time after each transaction, daily or for example once week or month or alternatively as soon as predefined amount of payments or number of payments have been collected. Merchants have possibility to monitor amount of sales via mobile payment system and generate reports like daily sales, sales by time of day, weekly sales etc using remote terminal 70.

Step S4 is called transaction cleared to client step. The service system might provide Client with periodic or real time or close to real time reports of usage of payments by employees of client. Service system might send automatic reminders to Clients to "top up" their monthly funds and receive funds from client bank 72. Client has possibility to generate reports of usage of mobile payment system by its employees (subscribers of system).

In further embodiment the Service System 20 sends notification message to mobile terminal of Merchant to verify payment or compare code shown by customer. Additionally clerk can send verification request such as code shown by customer to Service System to verify the code in order to prevent fraud. In further embodiment the clerk can use remote terminal 70 to access Service System 20 to check validity of said customer code or terminal number or eLunch voucher. Additional embodiment is to have a list of unique codes or ordered list of codes by POS for clerk to check that code shown by customer is valid. Check list can comprise list of random codes, or list of codes generated by some algorithm or list of codes for example in order 1, 2, 3, 4, etc. List would correspond to one in Service System 20 variable code part list.

It is to be understood that any feature described in relation to any one embodiment may be used alone, or in combination with other features described, and may also be used in combination with one or more features of any other of the embodiments, or any combination of any other of the embodiments. Furthermore, equivalents and modifications not described above may also be employed without departing from the scope of the invention, which is defined in the accompanying claims.

## Claims

1. A method of granting access to a service, wherein
• a dedicated code of a client from a subscriber is received over Internet (60) or communication network (30) by a service provider and stored to a service system (20);
• a mobile phone number to be associated with the service is received from the subscriber over Internet (60) or communication network (30) and stored to the service system (20);
• a confirmation request is sent from the service system (20) of the service provider to the client over Internet (60) or communication network (30), the request identifying the subscriber;
• a confirmation response is received from the client and stored to the service system (20);
• a confirmation message is sent from the service system (20) to the mobile phone number of the subscriber;
• a confirmation reply message is received by the service system (20) from the mobile phone number of the subscriber; and
• access to the service is granted for the subscriber.

2. A method according to claim 1, wherein identification information of the subscriber is received from the subscriber.

3. A method according to claim 1 or 2, wherein identification information of the subscriber is received from the client.

4. A method according to claim 3, wherein activation link is sent from the service system (20) over Internet (60) to a subscriber after the client has provided identification information of the subscriber to the service system (20).

5. A method according to any of the preceding claims, wherein identification information comprises at least one of name, address, employee identification number, social security number, and birth date.

6. A method according to any of the preceding claims, wherein the service provider registers the grant information to a service database.

7. A system for granting access to a service, wherein the system comprises at least
• a subscriber web interface (70) for receiving at a service system (20) a dedicated code of a client from a subscriber;
• subscriber web interface (70) for receiving and a database (600) for storing identification information of the subscriber and a mobile phone number to be associated with the service;
• messaging means for sending a confirmation request identifying the subscriber to the client via Internet (60) or communication network (30);
• messaging means for receiving a confirmation response from the client via Internet (60) or communication network (30);
• messaging means for sending a confirmation message to the mobile phone number of the subscriber via communication network (30);
• messaging means for receiving a confirmation reply message from the mobile phone number of the subscriber via communication network (30); and
• data storage means of database (600) for registering grant of access to the service for the subscriber.

8. A system according to claim 7, wherein the system comprises means to receive identification information of the subscriber from the subscriber.

9. A system according to claim 7 or 8, wherein the system comprises means to receive identification information of the subscriber from the client.

10. A system according to claim 9, wherein the service system (20) comprises means to send an activation link over Internet (60) to a subscriber after the client has provided identification information of the subscriber to the service system (20).

11. A system according to any of the preceding claims 7-10, wherein the system comprises means to recognise at least one of name, address, employee identification number, social security number, and birth date as the identification information.

12. A system according to any of the preceding claims 7-11, wherein the system comprises a service database for service provider to store the grant information.

13. A system according to any of the preceding claims 7-12, wherein messaging means for sending a confirmation message to the mobile phone number of the subscriber, and messaging means for receiving a confirmation reply message from the mobile phone number of the subscriber are arranged to send messages as one of SMS and MMS.
